(19)

Europäisches
Patentamt
European
Patent Office
Office européen
des brevets

(11) **EP 3 502 975 A1**

(12) **EUROPEAN PATENT APPLICATION**

(43) Date of publication:
26.06.2019 Bulletin 2019/26

(21) Application number: 17208970.8

(22) Date of filing: 20.12.2017

(51) Int Cl.:
*G06N 3/063* (2006.01)   *G06N 3/08* (2006.01)
*G06N 3/04* (2006.01)   *G06F 9/50* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(71) Applicant: **FUJITSU LIMITED
Kanagawa 211-8588 (JP)**

(72) Inventor: **ALDEA LOPEZ, Sergio
London, W13 9AS (GB)**

(74) Representative: **Haseltine Lake Kempner LLP
Lincoln House, 5th Floor
300 High Holborn
London WC1V 7JH (GB)**

(54) **METHODS AND APPARATUS FOR MODEL PARALLELISM IN ARTIFICIAL NEURAL NETWORKS**

(57)    The proposed method comprises automatically controlling allocation, to memories of available hardware resources, of parameters defining computational operations required to calculate an output of at least one layer of neurons of an artificial neural network. The allocation is controlled on the basis of previously-defined allocation data specifying how the operations required to calculate the output of the one layer of neurons are to be allocated to hardware resources to perform the operations. The allocation data is pre-defined using, at least partly, an automatic computer-implemented process, which may include checking before each iteration of the network which of the hardware resources are available to execute that iteration of the network and, if necessary, re-defining the allocation data for that iteration accordingly

FIG. 1a

EP 3 502 975 A1

## Description

Embodiments of the present invention relate to methods and apparatus for model parallelism in artificial neural networks.

Computational units in an artificial neural network (ANN) are modelled after neurons in the human brain, the neurons in the ANN being grouped by layers. Typically there is an input layer of neurons, an output layer of neurons, and hidden layers of neurons, for example convolution, pooling, rectified linear units, fully connected layers, etc. A Deep Neural Network (DNN) is an ANN with multiple hidden layers of computational units between input and output layers. Each computational unit combines different inputs, which are weighted, to compute a function. This function may be a linear combination of the weighted inputs, or something more elaborate such as a sigmoid function. When training an ANN, the outputs of the network are compared with a desired output using a loss function and an error value is calculated for each neuron in the output layer. The error values are then back-propagated until each neuron in the network has an error value. These error values are used to calculate the gradients of the loss function with respect to the weights in the network, the gradients in turn being used to update the weights in order to minimize the loss function.

DNNs offer the potential to achieve significant advancements in speech and image recognition, with accuracy performance exceeding those recorded by other sophisticated methods in Machine Learning (ML). However, the training process of DNNs is an extremely computationally intensive task, which typically requires large computational resources, including training (execution) time, and memory (RAM). To address the long training times, state-of-the-art techniques make use of hardware accelerators, including, for example, GPUs or Intel® Xeon Phi™, exploiting their vast computational power. However, these accelerators have memory restrictions, as they usually include a limited amount of in-device memory. Such memory restriction poses a problem in situations where the DNN to be trained requires more memory than that available within a single accelerator. In other words, where the parameters and the activations required to train the DNN do not fit into a single accelerator's memory, the process responsible for the training process cannot be performed straightaway.

In order to solve this problem, one proposed solution has been to split the parameters of a layer of neurons of the DNN and distribute such parameters across different accelerators, changing the training process accordingly to accommodate the distributed allocation of the weights. This is what is generally called 'model parallelism' (as opposed to 'data parallelism', where the entire DNN is replicated and stored on all accelerators, processing samples of the training data in parallel, for example as disclosed in WO2015003436).

In some circumstances, as discussed for example in Y. Jia, E. Shelhamer, J. Donahue, S. Karayev, J. Long, R. Girshick, S. Guadarrama and T. Darrell, "Caffe: Convolutional Architecture for Fast Feature Embedding," arXiv preprint arXiv:1408.5093, 2014 (hereafter "Caffe™"), such a training process with distributed parameters is not feasible. A training process with distributed parameters is disclosed in M. Abadi, A. Agarwal and P. Barham, "Large-Scale Machine Learning on Heterogeneous Distributed Systems," arXiv:1603.04467v2, 2015 and S. Tokui, K. Oono, S. Hido and J. Clayton, "Chainer: a Next-Generation Open Source Framework for Deep Learning," Proceedings of Workshop on Machine Learning Systems (LearningSys) in The Twenty-ninth Annual Conference on Neural Information Processing Systems (NIPS), 2015, but the distribution has to be manually defined. As discussed in T. Chen, M. Li, Y. Li, M. Lin, N. Wang, M. Wang, T. Xiao, B. Xu, C. Zhang and Z. Zhang, "MXNet: A Flexible and Efficient Machine Learning Library for Heterogeneous Distributed Systems," Neural Information Processing Systems, Workshop on Machine Learning Systems, 2015, discloses another training process, in which the actual distribution is not done by splitting a particular layer, but by placing different layers at different accelerators, for example.

W. Wang, G. Chen, H. Chen, T. T. A. Dinh, J. Gao, O. Beng Chin, K.-L. Tan and S. Wang, "Deep Learning at Scale and at Ease," ACM Trans. Multimedia Comput. Commun. Appl., Vol. 12, No. 4s, Article 69, November 2016 (hereafter "SINGA") proposes a framework that partitions a neural network at the granularity of the layers, the allocation to the different resources being static, i.e. it is not possible to change or adapt the allocation during the execution of a DNN. Moreover, it is still for a user to decide how the layers are partitioned, and hence there is not a complete automatic handling of how the layers are distributed.

Another limitation seen across different proposals is that, once separated, there is no way to recombine parameters corresponding to distributed layers (for example for serial execution or testing purposes).

It is desirable to provide an improved method and apparatus for model parallelism in artificial neural networks.

According to an embodiment of a first aspect there is provided a computer-implemented method comprising: automatically controlling allocation, to memories of available hardware resources, of parameters defining computational operations required to calculate an output of at least one layer of neurons of an artificial neural network, ANN, wherein: the allocation is controlled on the basis of previously-defined allocation data specifying how the operations required to calculate the output of the at least one layer of neurons are to be allocated to hardware resources to perform the operations, and the allocation data has been pre-defined using, at least partly, an automatic computer-implemented process.

This method has the technical effect of making the set-up and execution of an ANN using the memories and processing capabilities of multiple hardware resources simpler and more efficient. In an embodiment the details of how the parameters of a distributed layer in an ANN, such as a DNN, are to be split across different hardware resources, such as accelerators, are defined automatically, at least in part. This allocation information, which is shared by all processes or threads assigned to process each subpart of a particular layer, is used to automatically control the logic of how these distributed parameters are actually split. This allows a user to focus on the actual design of the architecture, regardless of how the layers will later be distributed across different hardware resources.

Such a method may realize dynamic and flexible high-level model parallelism. In particular, an embodiment may realize model parallelism for DNNs, hiding the details and the complexity of the distribution. As a result, this solution may be applied to any framework to provide model parallelism capabilities. These model parallelism capabilities allow ML practitioners to train DNNs with a larger number of parameters, overcoming the limitation of the memory available in the accelerators typically used. Having unlocked this possibility, larger problems may be tackled, improving the response from current artificial intelligence (AI) systems.

The allocation data may specify the number and identity of hardware resources to be used, how the parameters are to be split into groups, and how the groups of parameters are to be distributed amongst the hardware resources.

The allocation data may be initially defined on the basis of at least some information that has been obtained automatically by the computer-implemented process. The initial definition of the allocation data may also take into account additional information that has been input by a user of the ANN. That is, optionally, an embodiment allows for a personalised distribution, by taking user preferences as an input.

The information used to define the allocation data may relate to at least one of the definition of the ANN, the system to be used to execute the ANN, and the available hardware resources.

The automatic computer-implemented process to pre-define the allocation data may include checking before each iteration of the network which of the hardware resources are available to execute that iteration of the network and, if necessary, re-defining the allocation data for that iteration accordingly.

All or different subsets of the network of hardware resources available at the particular machine in which the ANN is executed may be used, and how allocation of the different subparts of the distributed layer is done may be changed dynamically, from one iteration of the network to another.

For example, in cloud computing or virtual computing environments, where the underlying hardware may change, it may be beneficial to have a DNN solution that works regardless of changes in, or current availability of, hardware resources. As a result, users of cloud computing services may be able to experiment with different DNN configurations more quickly, since users would not need to deal with the details of the actual distribution of the DNN, but would be able to focus on the actual design and tuning of the designed network architecture.

Controlling allocation of parameters may comprise carrying out a set-up process to set up the ANN for execution and a subsequent execution process to execute the ANN. The allocation data may be initially defined before the set-up process.

The set-up process may comprise verifying that hardware resources specified by the allocation data for execution of the ANN are available for use. If at least one of the hardware resources is not available for use, the allocation data may be updated so as to exclude allocation of parameters to memory of the unavailable hardware resource.

Allocation of the parameters to the memories of hardware resources may be carried out in accordance with the current allocation data. The set-up process may further comprise allocating a copy of all parameters to memory in a predetermined hardware resource.

Therefore, an embodiment may achieve an automatic dynamic distribution of layer parameters of an ANN, which allows for changes from one iteration of layer computation to another, depending on the availability of the underlying hardware resources.

The execution process may include verifying that hardware resources specified by the allocation data for execution of the ANN are available for use. If at least one of the hardware resources is no longer available for use, the parameters previously allocated to memory of the hardware resource that is no longer available may be reallocated to memory of at least another one of the hardware resources that is available for use. The allocation data may be updated so as to correspond to the reallocation of parameters. The execution process may further include creating processes or threads to execute respective computational operations as defined in the current allocation data and causing the computational operations to be performed. When a backward propagation phase of a layer has been executed, the execution process may further include updating the parameters of the layer in the memories of the relevant hardware resources in accordance with the result of the backward propagation.

Such a method may allow dynamic reallocation of layer parameters of an ANN to different available hardware resources. CPU and accelerator memory may be linked in a seamless manner so that, from the ANN perspective, the details of how the layers parameters are distributed, as well as the details of the necessary sub-operations, are hidden.

An embodiment may allow changes to be made in how a particular layer of a DNN is executed even during the same training process. In particular, fault-tolerant execution of a DNN, restarting the execution of the DNN from the last successful iteration, may be possible.

According to an embodiment of a second aspect there is provided a computer program which, when run on a computer, causes that computer to carry out a method embodying the first aspect.

According to an embodiment of a third aspect there is provided apparatus comprising: a processor to automatically control allocation, to memories of available hardware resources, of parameters defining computational operations required to calculate an output of at least one layer of neurons of an artificial neural network, ANN; and memory storing allocation data specifying how the operations required to calculate the output of the at least one layer of neurons are to be allocated to hardware resources to perform the operations, the allocation data having been defined using, at least partly, an automatic computer-implemented process; the processor controlling allocation on the basis of the allocation data. The automatic computer-implemented process to pre-define the allocation data may include checking before each iteration of the network which of the hardware resources are available to execute that iteration of the network and, if necessary, re-defining the allocation data for that iteration accordingly.

Apparatus according to an embodiment, hereafter sometimes referred to as a layer controller, may perform an automatic, dynamic, and flexible distribution of the layer parameters according to the allocation data shared by all processes or threads assigned to process each subpart of a particular layer. The achieved distribution of layer parameters is flexible since it may change according to the hardware resources available.

The allocation data may specify the number and identity of hardware resources to be used, how the parameters are to be split into groups, and how the groups of parameters are to be distributed amongst the hardware resources.

The allocation data may be initially defined on the basis of at least some information that has been obtained automatically by the computer-implemented process. Thus, an embodiment may realize an automatic flexible distribution of layer parameters of an ANN, depending on the underlying hardware resources, without the need for any user contribution.

The initial definition of the allocation data may also take into account additional information that has been input by a user of the ANN. For example, the definition of the allocation data may be guided by the user via an input file with information about the underlying topology (how many accelerators, memory, etc.). This may allow ML practitioners to experiment with different distributions with the aim of finding which one may work for a particular combination of DNN and hardware settings. The information may relate to at least one of the definition of the ANN, the system to be used to execute the ANN, and the available hardware resources.

The processor may carry out a set-up process to set up the ANN, the set-up process comprising verifying that hardware resources specified by the allocation data for execution of the ANN are available for use. If at least one of the hardware resources is not available for use, the allocation data may be updated so as to exclude allocation of parameters to memory of the unavailable hardware resource. Allocation of the parameters to the memories of hardware resources may be carried out in accordance with the current allocation data. The set-up process may further comprise allocating a copy of all parameters to memory in a predetermined hardware resource.

An embodiment of the layer controller may be able to use all or various subsets of the accelerators available at the particular machine in which a DNN is executed, and change dynamically, from one iteration of the network to another, how allocation of the different subparts of the distributed layer is done. Thus dynamic model parallelism, i.e. changing from one distribution of layer parameters to another depending on the availability of accelerators at any given time, may be achieved.

The processor may carry out an execution process to execute the ANN, the execution process including verifying that hardware resources specified by the allocation data for execution of the ANN are available for use. If at least one of the hardware resources is no longer available for use, the parameters previously allocated to memory of the hardware resource that is no longer available may be reallocated to memory of at least another one of the hardware resources that is available for use, and updating the allocation data so as to correspond to the reallocation of parameters. The execution process may further include creating processes or threads to execute respective computational operations as defined in the current allocation data and causing the computational operations to be performed. When a backward propagation phase of a layer has been executed, the execution process may further include updating the parameters of the layer in the memories of the relevant hardware resources in accordance with the result of the backward propagation.

Thus, the actual distribution of layer parameters may change from one iteration to another. This dynamism may play a crucial role in fault-tolerant scenarios, as well as cloud and virtual computing environments, in which the conditions and availability of the accelerators may change. For example, higher priority jobs may reclaim some of the accelerators in use during training of a DNN, forcing the training framework to stop. In that case an embodiment may dynamically rebalance the workload to the remaining available accelerators. As a result, the training framework will not stop or crash in such circumstances. In another example, if one or more accelerators being used in a DNN training process were to fail, the training framework would continue the training from the last successful iteration, instead of having to restart from the last snapshot of the layer parameters (if taken), which might lead to repeating many more iterations, or even, in the absence of snapshots, having to repeat the training process from the beginning.

Reference will now be made, by way of example, to the accompany drawings, in which:

Figure 1a is a flowchart of a method in accordance with an embodiment;
Figure 1b is a block diagram illustrating apparatus in accordance with an embodiment;
Figure 2a is a flowchart of a previously-proposed method of training a DNN;
Figure 2b is a flowchart of a method of training a DNN in accordance with an embodiment;
Figure 3 is a diagram for use in explaining how a layer of a DNN is distributed in accordance with an embodiment;
Figure 4 is a flowchart of a process for use with a method in accordance with an embodiment;
Figure 5 is a diagram for use in explaining how the parameters of a layer may be partitioned;
Figure 6 is a flowchart of a DNN set up process in a method in accordance with an embodiment;
Figure 7 is a flowchart of a DNN execution process in a method in accordance with an embodiment;
Figure 8 is a diagram for use in explaining the use of pointers to memory in an embodiment;
Figure 9 is a diagram for use in explaining serial and parallel execution of DNN processes;
Figure 10 is a diagram for use in explaining an embodiment;
Figures 11a and 11b show respective examples of computer code illustrating the definition of a network and how a user defines and launches training;
Figure 12 is a diagram for use in explaining an application of an embodiment;
Figure 13 is a diagram for use in explaining another application of an embodiment; and
Figure 14 is a block diagram of a computing device suitable for carrying out a method of an embodiment.

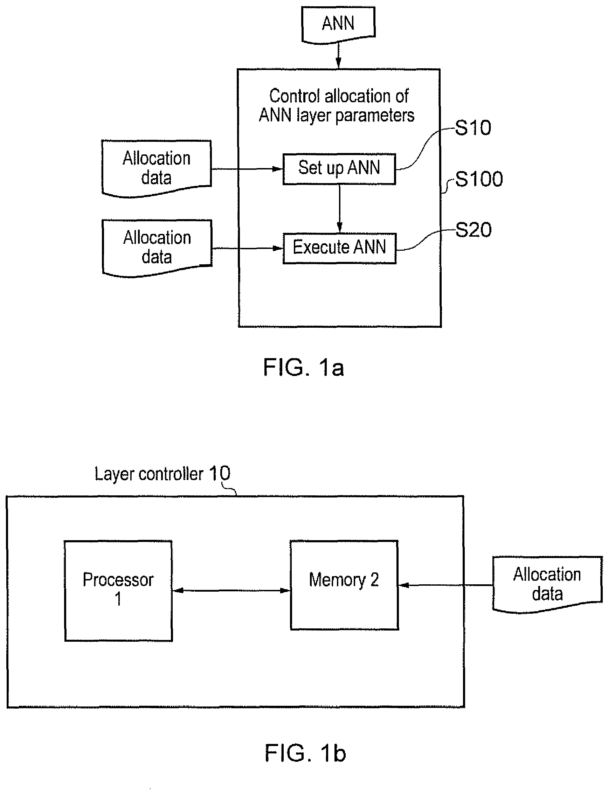

The flowchart of Figure 1a shows a method in accordance with an embodiment which comprises, in step S100, automatically controlling allocation, to memories of available hardware resources, of parameters defining computational operations required to calculate an output of at least one layer of neurons of an ANN. The method may comprise sub-step S10 in which a set-up process to set up the ANN for execution is carried out and sub-step S20 in which an execution process to execute the ANN is carried out. The allocation is controlled on the basis of previously-defined allocation data specifying how the operations required to calculate the output of the at least one layer of neurons are to be allocated to hardware resources to perform the operations. The allocation data is pre-defined using an automatic computer-implemented process that may additionally be customized by user specifications. The automatic computer-implemented process to pre-define the allocation data may include checking before each iteration of the network which of the hardware resources are available to execute that iteration of the network and, if necessary, re-defining the allocation data for that iteration accordingly.

Apparatus in accordance with an embodiment is shown in Figure 1b. Layer controller 10 comprises a processor 1 and memory 2. Processor 1 is configured to automatically control allocation, to memories of available hardware resources, of parameters defining computational operations required to calculate an output of at least one layer of neurons of an ANN in accordance with pre-defined allocation data stored in memory 2.

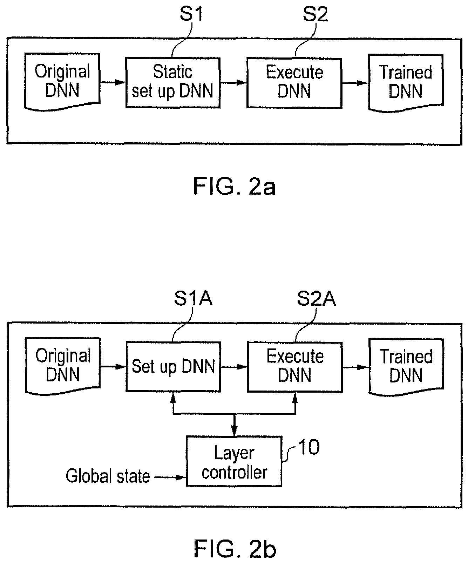

An application of an embodiment in the training of a DNN will now be explained in comparison to a previously-proposed method. In the previously-proposed method illustrated in Figure 2a, an original (i.e. a previously-constructed) DNN is set up for execution on a network of accelerators at step S1 and is executed in step S2. The configuration of the network is defined by a user, i.e. the user must be aware of the underlying accelerators, and is static, i.e. cannot be changed during execution of the DNN. As discussed above, in previously-proposed methods such as that of Figure 2a, a training process with distributed parameters was either not possible, or the actual distribution was not done by splitting a particular layer, but by placing different layers at different accelerators, or it had to be manually defined, which required knowledge of the underlying hardware, and a certain level of user expertise.

In contrast, in an embodiment such as that illustrated in Figure 2b, the original DNN is set up for execution in step S1A and then executed in step S2A under the control of a layer controller 10. Because of this the set up does not require the user to have any knowledge of the underlying accelerators. Furthermore, use of such a layer controller 10 allows the DNN to be flexible and dynamically executable using different accelerators.

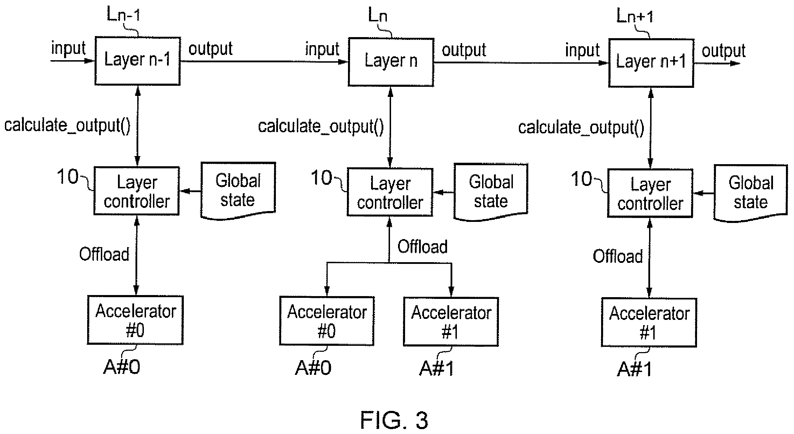

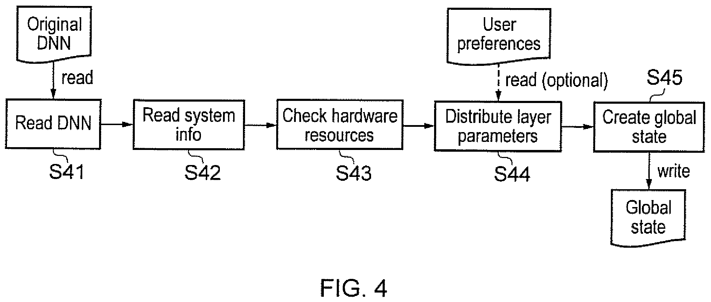

The diagram of Figure 3 shows how a current layer, e.g. layer Ln-1, layer $L_n$, layer $L_{n+1}$, of a DNN to be executed is distributed on underlying accelerators, e.g. accelerator A#0 and/or accelerator A#1, under the control of a layer controller 10 in accordance with an embodiment. The process of calculating the output of a particular layer may be done in several different ways, and by using different accelerators. The proposed layer controller 10 is operable to ensure that a particular layer of the DNN is distributed and executed in accordance with previously-defined allocation data, hereafter referred to as "global state", that specifies how the necessary operations to calculate the output of the layer are distributed and offloaded to different accelerators. This global state is obtained prior to set up of the DNN, as will be explained with reference to Figure 4. For example, as shown in Figure 3, in accordance with the global state read by layer controller 10, layer controller 10 ensures that the operations necessary to calculate the output of layer $L_{n-1}$ are allocated to accelerator A#0, that the operations necessary to calculate the output of layer $L_n$ are distributed between accelerator A#0 and accelerator A#1, and that the operations necessary to calculate the output of layer Ln+1 are allocated to accelerator A#1.

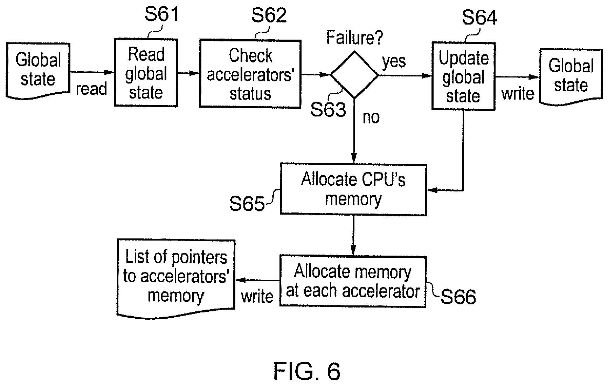

Figure 4 illustrates an embodiment of an initial set up process of a DNN (step S1A in Figure 1b) in which the global state is defined. The process starts in step S41 by reading the definition of a DNN, i.e. the listing of the different layers, their characteristics, and their connections, etc. (in Caffe™, for example, DNNs are defined following a prototxt format). In step S42 system information is read. This may comprise reading and parsing system files (such as /proc/cpuinfo), or the output of certain commands, such as nvidia-smi and/or dmesg, to extract information that assists in automatically building a comprehensive view of the underlying hardware. In step 43 the availabilty of the hardware resources, in particular the accelerators, and the specifications of those resources, is checked, for example how many accelerators are available, how much memory they have, their interconectivity, etc.. In step S44 of the process, how the parameters of each layer of the DNN are to be distributed at execution time is automatically determined, using the definition of the DNN, the system information, and the knowledge of the underlying hardware acquired in steps S41 to 43 and (optionally) any user preferences which have been input. In step S45 the global state, which specifies the distribution properties, e.g. the number of accelerators to be used, the number of blocks to be created, the axis of spliting, per layer to be distributed, is created and stored. This information is stored in an internal data structure that may be exported to an interchangeable format (JSON) if needed. This may also be useful for logging purposes. The global state may comprise a descriptor, which may be implemented as an independent file or as a data structure in accordance with that used in the system. It will typically be handled as a data structure, but the creation of an independent file is useful to log the different distributions when profiling multiple experiments, for example. This global state descriptor may hold the distribution properties as elements in a multiple-entry list, one per layer to be distributed. Each entry may hold a set of key-value pairs that describe such properties (block ID, accelerator, block size, pointer to CPU memory, pointer to accelerator memory). As subsequently explained with reference to Figure 6, these values will be read later by the layer controller 10 to determine how the layer parameters are to be distributed at each iteration of the DNN training.

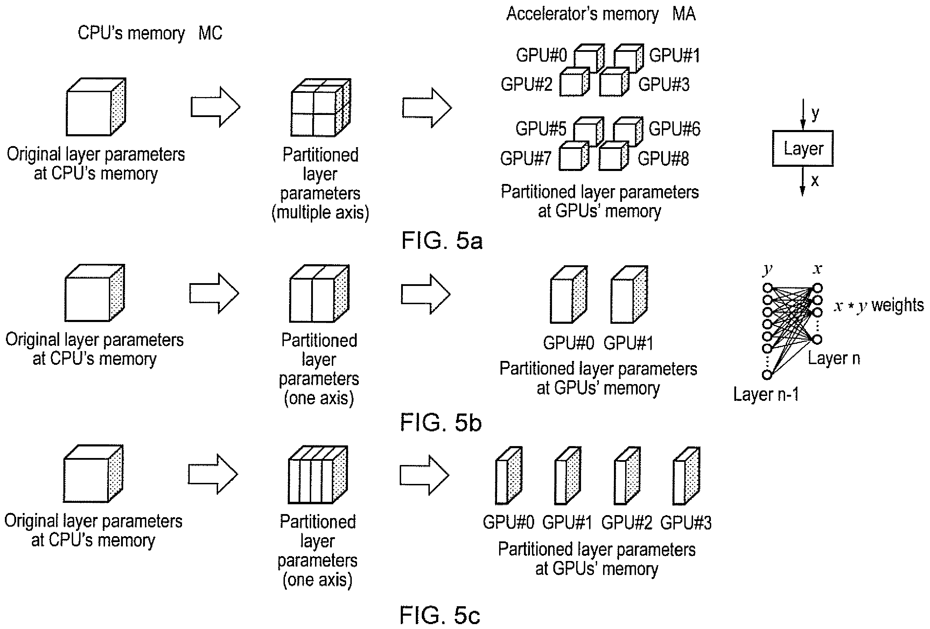

Figure 5 shows different potential partitioning of a Binary Large Object (BLOB) representing a particular layer's parameters. While the layer parameters remain unsplit at the CPU's memory MC (lefthand side of Figure 5), the corresponding copy of the parameters at accelerators' memories MA may be split in one of several different ways. Visualizing the layer parameters as multi-dimensional arrays, for example, as shown in Figure 5, the layer parameters may be split along one axis (Figures 5b and 5c) or multiple axes (Figure 5a) and may be split one or more times along the splitting axis (once along two axes in Figure 5a creating eight blocks, once along one axis in Figure 5b creating two blocks, and three times along one axis creating four blocks). The blocks resulting from the splitting may be allocated to different accelerators' memories, for example in Figure 5a the eight blocks are allocated respectively to the memories of eight accelerators GPU#0, GPU#1, GPU#2, GPU#3, GPU#5, GPU#6, GPU#7, GPU#8. In an embodiment, how the layer parameters are to be split may be automatically decided. For example, in the case that there are two accelerators (GPU#0, GPU#1 as shown in Figure 5b), that the number of inputs to the layer is $y$, and the number of outputs is $x$, the layer parameters may be split into two blocks each of size $\dfrac{x*y}{2}$. Splitting may also be customized in accordance with input user preferences, which may state how many accelerators are to be used, how many blocks are to be created, and/or the axis of splitting, per layer to be distributed.

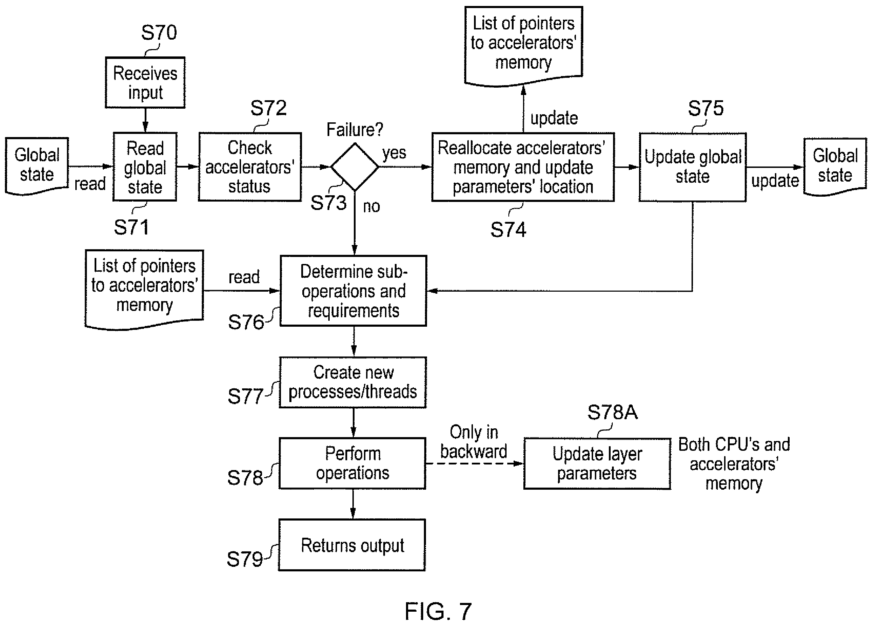

Figure 6 and Figure 7 illustrate processes followed by the layer controller 10 at different stages in accordance with embodiments.

Figure 6 shows the process followed by the layer controller 10 in the set up phase of the DNN (step S1A of Figure 1b), after the initial set-up process of Figure 4 has been carried out to create the global state, to allocate the necessary memory for the layer parameters prior to execution of the DNN (step S2A of Figure 1b). In step S61 the layer controller 10 reads the stored global state, which was created during the initial set up of the DNN (Figure 4). Then, in step S62, the status of the available accelerators is checked, in order to validate the defined distribution of the layer parameters according to the global state. In step S63 it is determined whether the result of the check on the status of the accelerators indicates that one or more of the accelerators to be used has failed, is absent, or has provided no response. If that is the case (No, step S63), the method proceeds to step S64 in which the global state is updated accordingly, following a process similar to the one described with respect to Figure 4, but under the new conditions. Once the global state has been verified in step S63 (Yes) or updated in step S64, the method allocates memory at the CPU for the unsplit layer parameters (step S65), and at the different accelerators (step S66). As a result, the method produces a list of pointers to the different memory locations of each block of layer parameters at each accelerator. These pointers will later be used to locate such blocks and calculate the layer's output accordingly.

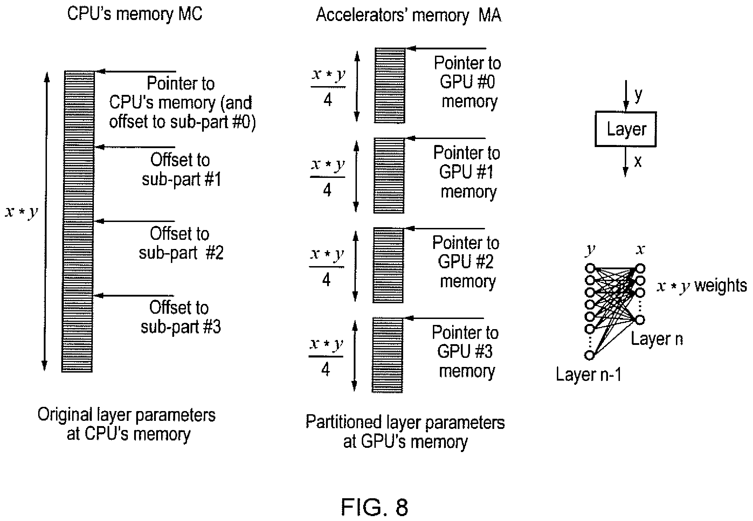

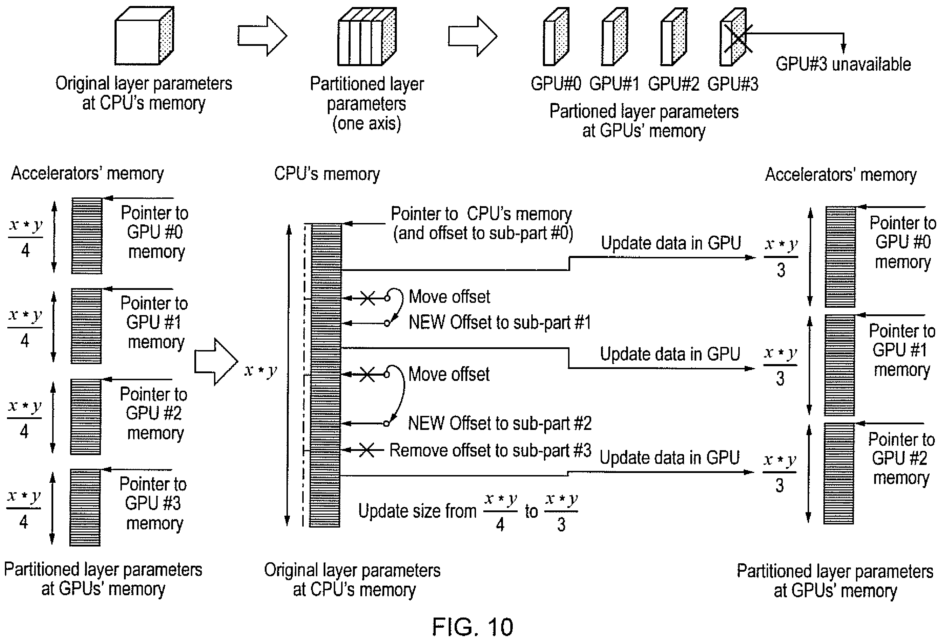

Figure 7 illustrates the process followed by the layer controller 10 during forward and backward phases of the execution of the DNN (step S2A of Figure 1b). In the process, for each iteration of the training (one cycle of the forward and backward phases), training data is received in step S70 and the stored global state is read in step S71. In step S72 the status of the accelerators is checked in step S72 to determine whether it is in accordance with that of the global state. In the case of failure, absence, or lack of response from one or several of these accelerators (Yes, step S73), in step S74 blocks of layer parameters are reallocated amongst the memories of the remaining accelerators accordingly, returning new values for the pointers to the different memory locations of each block for each split layer. In most cases it will be necessary to reallocate all the parameters, not just those previously allocated to the failed accelerator(s), in order to balance the workload of each accelerator, as shown in Figure 10, which illustrates reallocation and update of the global state to go from a distribution over four GPUs (GPU#0 to GPU#3) to a distribution over three GPUs (GPU#0 to GPU#2). In addition, the parameters located at each accelerator are updated, data being moved from the reference copy at the CPU, for example as shown in Figure 10. This movement is facilitated by storing pointers to the corresponding sub-parts at the CPU's memory MC, as well as the size of each sub-part, for example as shown in Figure 8. Original layer parameters allocated to memory of the CPU are shown on the lefthand side of Figure 8, and partitioned layer parameters allocated to the different accelerators' memory location (using four GPUs as an example) are shown to the right. Offsets to the corresponding sub-parts at the CPU's memory are also stored, to aid the movement of data from the CPU to the accelerators and vice versa. In step S75 the global state is updated according to the changes made in step S74, following a process similar to the one described with reference to Figure 4, but under the new conditions.

The process of Figure 7 continues at step S76, after updating of the global state in step S75 or if all accelerators are verified as operational in step S73 (No), by reading the list of pointers to the accelerators' memories and determining the sub-operations that are necessary to calculate the layer's output as if the layer is unsplit (that is, the output of the distributed layer should be equivalent to the serial layer's output, regardless of how the layer has been actually split). These sub-operations involve the multiplication of split multi-dimensional matrices, which are stored at different accelerators (memory locations are kept in the list of pointers previously mentioned), and therefore, the logic of such sub-operations depends on the actual distribution, including how many blocks there are and the axis along which the layer parameters are split. As a consequence, each of the different sub-operations required to calculate the output may have different requirements, e.g. dimensionalty of the submatrices involved, or operations before and/or after the multiplication. These latter operations may involve the addition and/or concatenation of matrices, in order to produce a result which is equivalent to the one resulting from a serial unsplit execution of the layer. In any case, the actual mathematical operations performed with such matrices may be done by a linear algebra library, such as cuBLAS.

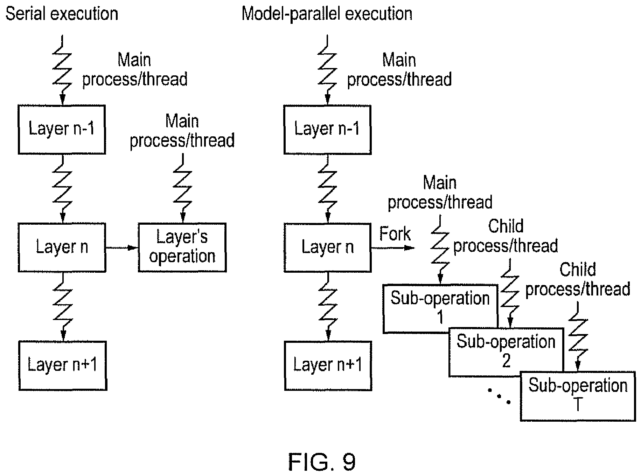

After determination of the sub-operations and parameters in step S76, new processes/threads are created in step S77. As shown in Figure 9, which illustrates serial execution on the lefthand side and model-parallel execution on the righthand side, the execution of each sub-operation of a layer is done by a different process or thread, which is created dynamically prior to the actual execution of the required sub-operations. In this way, whenever there is a change in the conditions for the layer operation, only the necessary processes or threads are created to handle the resulting sub-operations. After creation of the new processes/threads, the sub-operations are performed at step S78. Finally, at step S79, the layer controller 10 returns the output of the layer, which means that, from the network perspective, an input was given, and an output was calculated, without any more detail regarding how the actual operations were executed. In the case that the layer is executing its backward propagation phase, there is one additional task that is performed, at step S78A, which is the update of the layer parameters, both those located at the memory MC of the CPU and those located at the memories MA of the accelerators.

Embodiments may be implemented as an additional module to potentially any framework, providing it with model parallel capabilities, and encapsulating the details and complexity of the distribution. For example, the proposed method may be implemented within the Caffe™ framework. Caffe™ implements a mechanism in which the CPU and the GPU memory are related by a wrapper. This wrapper considers that the representation of a particular multi-dimensional array is identical in both the CPU and GPU memories. A module in accordance with an embodiment may be attached to this wrapper, modifying the wrapper to take into account the pointers and offset explained with reference to Figure 8. In this way, when a function within Caffe™ tries to move data from CPU to GPU memory (or vice versa), this movement would now be limited to the accelerators to which this data has been allocated. The same would happen when returning pointers to the position in memory of the layer parameters. In Caffe™, only one position is returned, as the layer's operation is not split. By implementing the proposed method within Caffe™, it would be necessary to create new processes/threads, and each one of these would receive a different pointer, corresponding to the sub-part required for its sub-operation.

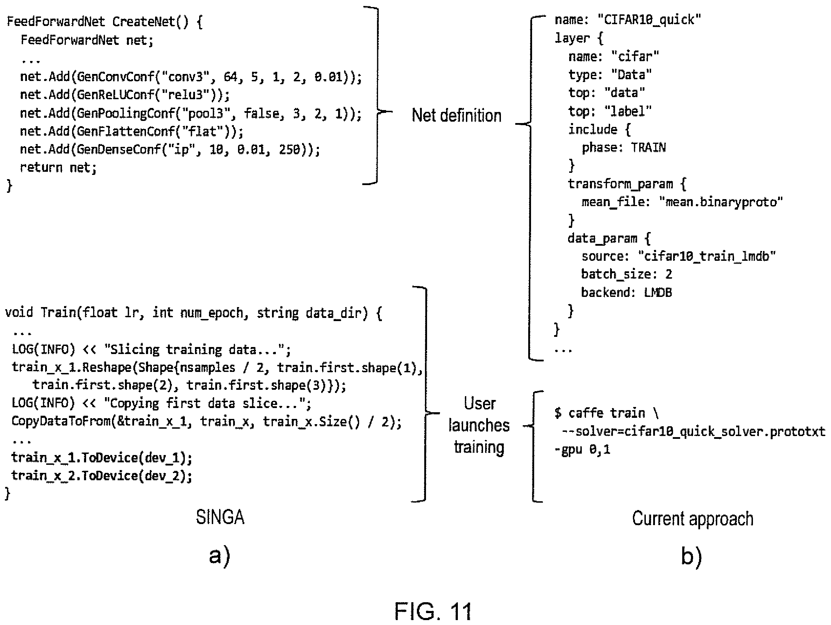

Figures 11a and 11b show respective examples of computer code illustrating the definition of a network and how a user defines and launches training in accordance with SINGA's approach to model distribution (Figure 2a) and an embodiment if implemented in Caffe™ (Figure 2b). The code shown in Figure 2a was extracted from github project page: *https://github.com/apache/incubator-singa/blob/master/examples/cifar10/alexnet-parallel.cc*). As can be seen from Figure 2a, SINGA's approach is actually restricted by the user contribution, as it forces the user to define the distribution explicitly for each different model and underlying architecture.

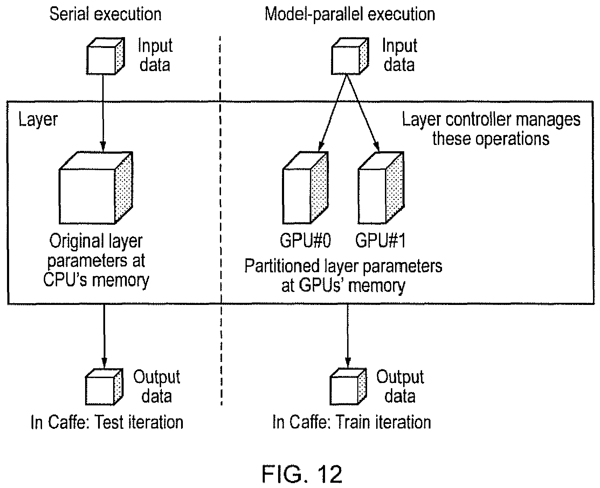

Figure 12 illustrates how the dynamic capabilities of the proposed method would allow different executions to be prepared when Caffe™ is going through its test and train phases. The train iterations of Caffe™ may be performed in parallel, while the test iterations may be executed serially, at the CPU or using only one GPU's memory. This is also useful when Caffe™ is trained using specific hardware, but the inference/test phase of the DNN is done in another system which is only able to handle serial execution.

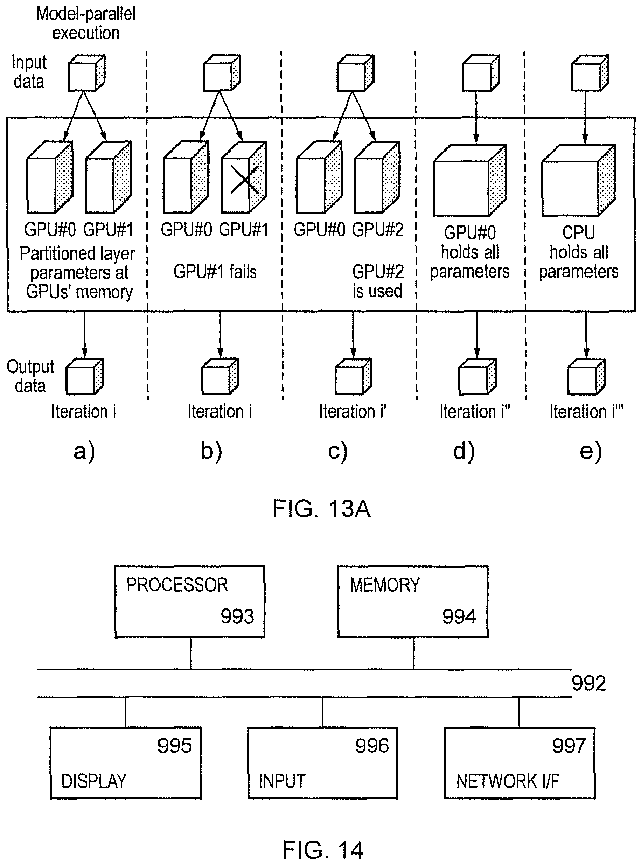

Figure 13 shows another example of an application of the proposed method, in this case to the recovery of a training process when one of the accelerators in use fails. Since embodiments allow for dynamic allocation of the layer parameters across different iterations, fault recovery is possible. Figure 13a illustrates the intended configuration at a cetain iteration i. If at the beginning of iteration i there is a failure at one of the accelerators (Figure 13b), or simply a lack of response, an embodiment may either make use of another available accelerator to reallocate the corresponding portion of layer parameters (Figure 13c), or reallocate all layer parameters to one or more other accelerators already in use (Figure 13d), or simply fall back to an execution using only the memory and capabilities of the CPU (Figure 13e).

Figure 14 is a block diagram of a computing device, such as a data storage server, which may be used to implement some or all of the steps of a method of an embodiment, and perform some or all of the tasks of apparatus of an embodiment. For example, the computing device of Figure 14 may be used to implement step S100, step S10 or step S20 of the method illustrated in Figure 1a, and to perform some or all of the tasks of the layer controller 10 shown in Figure 1b.

The computing device comprises a processor 993, and memory, 994. Optionally, the computing device also includes a network interface 997 for communication with other such computing devices, for example with other computing devices of invention embodiments.

For example, an embodiment may be composed of a network of such computing devices. Optionally, the computing device also includes one or more input mechanisms such as keyboard and mouse 996, and a display unit such as one or more monitors 995. The components are connectable to one another via a bus 992.

The memory 994, which may for example serve as memory 2 of the layer controller 10, or memory MC of the CPU, or memory MA of an accelerator A, may include a computer readable medium, which term may refer to a single medium or multiple media (e.g., a centralized or distributed database and/or associated caches and servers) configured to carry computer-executable instructions or have data structures stored thereon. Computer-executable instructions may include, for example, instructions and data accessible by and causing a general purpose computer, special purpose computer, or special purpose processing device (e.g., one or more processors) to perform one or more functions or operations. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993, which may for example serve as processor 1 of the layer controller 10, is configured to control the computing device and execute processing operations, for example executing computer program code stored in the memory 994 to implement some or all of the methods described with reference to Figures 1a, 2b, 3, 4, 5, 6, 7, 8, 9, 10, 12 and/or 13 and defined in the claims. For example, processor 993 may execute computer program code to implement each of steps S10 and S20 of Figure 1b, or only step S10 of Figure 1b in whole or in part, or only step S20 of Figure 1b in whole or in part.

The memory 994 stores data being read and written by the processor 993. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein.

The display unit 995 may display a representation of data stored by the computing device and may also display a cursor and dialog boxes and screens enabling interaction between a user and the programs and data stored on the computing device. The input mechanisms 996 may enable a user to input data and instructions to the computing device.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc may be included in the computing device.

Methods embodying the present invention may be carried out on a computing device such as that illustrated in Figure 14. Such a computing device need not have every component illustrated in Figure 14, and may be composed of a subset of those components. A method embodying the present invention may be carried out by a single computing device in communication with one or more data storage servers via a network. The computing device may be a data storage itself storing at least a portion of the data.

A method embodying the present invention may be carried out by a plurality of computing devices operating in cooperation with one another. One or more of the plurality of computing devices may be a data storage server storing at least a portion of the data.

Embodiments may be implemented in hardware, or as software modules running on one or more processors, or on a combination thereof. That is, those skilled in the art will appreciate that a microprocessor or digital signal processor (DSP) may be used in practice to implement some or all of the functionality described above.

The invention may also be embodied as one or more device or apparatus programs (e.g. computer programs and computer program products) for carrying out part or all of the methods described herein. Such programs embodying the present invention may be stored on computer-readable media, or could, for example, be in the form of one or more signals. Such signals may be data signals downloadable from an Internet website, or provided on a carrier signal, or in any other form.

The above-described embodiments of the present invention may advantageously be used independently of any other of the embodiments or in any feasible combination with one or more others of the embodiments.

## Claims

1. A computer-implemented method comprising:

   automatically controlling allocation, to memories of available hardware resources, of parameters defining computational operations required to calculate an output of at least one layer of neurons of an artificial neural network, ANN, wherein:

   the allocation is controlled on the basis of previously-defined allocation data specifying how the operations required to calculate the output of the at least one layer of neurons are to be allocated to hardware resources to perform the operations, and

   the allocation data has been pre-defined using, at least partly, an automatic computer-implemented process.

2. A method as claimed in claim 1, wherein the automatic computer-implemented process checks before each iteration of the network which of the hardware resources are available to execute that iteration of the network and, if necessary, re-defines the allocation data for that iteration accordingly.

3. A method as claimed in claim 1 or 2, wherein the allocation data specifies the number and identity of hardware resources to be used, how the parameters are to be split into groups, and how the groups of parameters are to be distributed amongst the hardware resources.

4. A method as claimed in claim 1, 2 or 3, wherein the allocation data is initially defined on the basis of at least some information that has been obtained automatically by the computer-implemented process.

5. A method as claimed in claim 4, wherein the initial definition of the allocation data also takes into account additional information that has been input by a user of the ANN.

6. A method as claimed in claim 4 or 5, wherein the information relates to at least one of the definition of the ANN, the system to be used to execute the ANN, and the available hardware resources.

7. A method as claimed in any preceding claim, wherein controlling allocation of parameters comprises carrying out a set-up process to set up the ANN for execution and a subsequent execution process to execute the ANN.

8. A method as claimed in claim 7, wherein the set-up process comprises:

   verifying that hardware resources specified by the allocation data for execution of the ANN are available for use;
   if at least one of the hardware resources is not available for use, causing the allocation data to be updated so as to exclude allocation of parameters to memory of the unavailable hardware resource; and
   controlling the allocation of the parameters to the memories of hardware resources in accordance with the current allocation data.

9. A method as claimed in claim 8, wherein the set-up process further comprises allocating a copy of all parameters to memory in a predetermined hardware resource.

**10.** A method as claimed in any one of claims 7 to 9, wherein the execution process includes:

verifying that hardware resources specified by the allocation data for execution of the ANN are available for use; and

if at least one of the hardware resources is no longer available for use, causing the parameters previously allocated to memory of the hardware resource that is no longer available to be reallocated to memory of at least another one of the hardware resources that is available for use, and updating the allocation data so as to correspond to the reallocation of parameters.

**11.** A method as claimed in any preceding claim, further comprising:

creating multiple concurrent threads to execute respective parallel computational operations as defined in the allocation data; and

causing the computational operations to be performed.

**12.** A method as claimed in claim 10, or claim 11 when read as appended to claim 10, wherein the execution process further includes:

when a backward propagation phase of a layer has been executed, updating the parameters of the layer in the memories of the relevant hardware resources in accordance with the result of the backward propagation.

**13.** Apparatus comprising:

a processor to automatically control allocation, to memories of available hardware resources, of parameters defining computational operations required to calculate an output of at least one layer of neurons of an artificial neural network, ANN; and

memory storing allocation data specifying how the operations required to calculate the output of the at least one layer of neurons are to be allocated to hardware resources to perform the operations, the allocation data having been defined using, at least partly, an automatic computer-implemented process;

the processor controlling allocation on the basis of the allocation data.

**14.** Apparatus as claimed in claim 13, wherein the processor carries out a set-up process to set up the ANN, the set-up process comprising:

verifying that hardware resources specified by the allocation data for execution of the ANN are available for use;

if at least one of the hardware resources is not available for use, causing the allocation data to be updated so as to exclude allocation of parameters to memory of the unavailable hardware resource; and

controlling the allocation of the parameters to the memories of hardware resources in accordance with the current allocation data.

**15.** Apparatus as claimed in claim 13 or 14, wherein the processor carries out an execution process to execute the ANN, the execution process including:

verifying that hardware resources specified by the allocation data for execution of the ANN are available for use; and

if at least one of the hardware resources is no longer available for use, causing the parameters previously allocated to memory of the hardware resource that is no longer available to be reallocated to memory of at least another one of the hardware resources that is available for use, and updating the allocation data so as to correspond to the reallocation of parameters.

ANN

Control allocation of
ANN layer parameters

Allocation
data → Set up ANN ⌐S10

⌐S100

Allocation
data → Execute ANN ⌐S20

## FIG. 1a

Layer controller 10

Processor
1 ↔ Memory 2 ← Allocation
data

## FIG. 1b

S1　　　　　　S2

```
┌─────────────────────────────────────────────────────────┐
│  ┌─────────┐   ┌──────────┐   ┌─────────┐   ┌─────────┐   │
│  │Original │ → │  Static  │ → │ Execute │ → │ Trained │   │
│  │  DNN    │   │set up DNN│   │  DNN    │   │  DNN    │   │
│  └─────────┘   └──────────┘   └─────────┘   └─────────┘   │
└─────────────────────────────────────────────────────────┘
```

FIG. 2a

S1A　　　　　　S2A

```
┌─────────────────────────────────────────────────────────┐
│  ┌─────────┐   ┌──────────┐   ┌─────────┐   ┌─────────┐   │
│  │Original │ → │Set up DNN│ → │ Execute │ → │ Trained │   │
│  │  DNN    │   │          │   │  DNN    │   │  DNN    │   │
│  └─────────┘   └──────────┘   └─────────┘   └─────────┘   │
│                     ↑              ↑                       │
│                     └──────┬───────┘                       │
│                      ┌──────────┐ ⌐10                     │
│  Global state ──→    │  Layer   │                          │
│                      │controller│                          │
│                      └──────────┘                          │
└─────────────────────────────────────────────────────────┘
```

FIG. 2b

FIG. 3

EP 3 502 975 A1

Original DNN

read

Read DNN

S41

Read system info

S42

Check hardware resources

S43

User preferences

read (optional)

Distribute layer parameters

S44

S45

Create global state

write

Global state

FIG. 4

EP 3 502 975 A1

CPU's memory  MC

Accelerator's memory  MA

Original layer parameters
at CPU's memory

Partitioned
layer
parameters
(multiple axis)

GPU#0  GPU#1
GPU#2  GPU#3

GPU#5  GPU#6
GPU#7  GPU#8

Partitioned layer parameters
at GPUs' memory

$\downarrow y$

Layer

$\downarrow x$

## FIG. 5a

Original layer parameters
at CPU's memory

Partitioned
layer
parameters
(one axis)

GPU#0  GPU#1

Partitioned layer parameters
at GPUs' memory

$y$      $x$

$x * y$ weights

Layer n

Layer n-1

## FIG. 5b

Original layer parameters
at CPU's memory

Partitioned
layer
parameters
(one axis)

GPU#0  GPU#1  GPU#2  GPU#3

Partitioned layer parameters
at GPUs' memory

## FIG. 5c

S61    S62    S64

Global state —read→ Read global state → Check accelerators' status → Failure? —yes→ Update global state —write→ Global state

S63   no

↓

Allocate CPU's memory   S65

↓

List of pointers to accelerators' memory ←write— Allocate memory at each accelerator   S66

FIG. 6

FIG. 7

CPU's memory MC

Accelerators' memory MA

Pointer to
CPU's memory (and
offset to sub-part #0)

Offset to
sub-part #1

$x*y$

Offset to
sub-part #2

Offset to
sub-part #3

Original layer parameters
at CPU's memory

$\dfrac{x*y}{4}$  Pointer to
GPU #0
memory

$\dfrac{x*y}{4}$  Pointer to
GPU #1
memory

$\dfrac{x*y}{4}$  Pointer to
GPU #2
memory

$\dfrac{x*y}{4}$  Pointer to
GPU #3
memory

Partitioned layer parameters
at GPU's memory

$y$

Layer

$x$

$y$  $x$

$x*y$ weights

Layer n

Layer n-1

EP 3 502 975 A1

FIG. 8

Serial execution

Model-parallel execution

FIG. 9

Original layer parameters
at CPU's memory

Partitioned layer
parameters
(one axis)

GPU#0 GPU#1 GPU#2 GPU#3

GPU#3 unavailable

Partioned layer parameters
at GPUs' memory

Accelerators' memory

$\dfrac{x*y}{4}$ — Pointer to GPU #0 memory

$\dfrac{x*y}{4}$ — Pointer to GPU #1 memory

$\dfrac{x*y}{4}$ — Pointer to GPU #2 memory

$\dfrac{x*y}{4}$ — Pointer to GPU #3 memory

Partitioned layer parameters
at GPUs' memory

CPU's memory

$x*y$

Pointer to CPU's memory
(and offset to sub-part #0)

Move offset
NEW Offset to sub-part #1

Move offset

NEW Offset to sub-part #2

Remove offset to sub-part #3

Update size from $\dfrac{x*y}{4}$ to $\dfrac{x*y}{3}$

Original layer parameters
at CPU's memory

Update data in GPU

Update data in GPU

Update data in GPU

Accelerators' memory

$\dfrac{x*y}{3}$ — Pointer to GPU #0 memory

$\dfrac{x*y}{3}$ — Pointer to GPU #1 memory

$\dfrac{x*y}{3}$ — Pointer to GPU #2 memory

Partitioned layer parameters
at GPUs' memory

FIG. 10

EP 3 502 975 A1

```
FeedForwardNet CreateNet() {
  FeedForwardNet net;
  ...
  net.Add(GenConvConf("conv3", 64, 5, 1, 2, 0.01));
  net.Add(GenReLUConf("relu3"));
  net.Add(GenPoolingConf("pool3", false, 3, 2, 1));
  net.Add(GenFlattenConf("flat"));
  net.Add(GenDenseConf("ip", 10, 0.01, 250));
  return net;
}
```

Net definition

```
name: "CIFAR10_quick"
layer {
  name: "cifar"
  type: "Data"
  top: "data"
  top: "label"
  include {
    phase: TRAIN
  }
  transform_param {
    mean_file: "mean.binaryproto"
  }
  data_param {
    source: "cifar10_train_lmdb"
    batch_size: 2
    backend: LMDB
  }
}
...
```

```
void Train(float lr, int num_epoch, string data_dir) {
  ...
  LOG(INFO) << "Slicing training data...";
  train_x_1.Reshape(Shape{nsamples / 2, train.first.shape(1),
      train.first.shape(2), train.first.shape(3)});
  LOG(INFO) << "Copying first data slice...";
  CopyDataToFrom(&train_x_1, train_x, train_x.Size() / 2);
  ...
  train_x_1.ToDevice(dev_1);
  train_x_2.ToDevice(dev_2);
}
```

User launches training

```
$ caffe train \
  --solver=cifar10_quick_solver.prototxt
-gpu 0,1
```

SINGA

a)

Current approach

b)

FIG. 11

Serial execution

Model-parallel execution

Input data

Input data

Layer

Layer controller manages these operations

GPU#0    GPU#1

Original layer parameters at CPU's memory

Partitioned layer parameters at GPUs' memory

Output data

Output data

In Caffe: Test iteration

In Caffe: Train iteration

FIG. 12

Model-parallel
execution

Input
data

GPU#0 GPU#1 | GPU#0 GPU#1 | GPU#0 GPU#2 | GPU#0 | CPU
Partitioned layer | | | holds all | holds all
parameters at | GPU#1 fails | GPU#2 | parameters | parameters
GPUs' memory | | is used | |

Output
data

Iteration i | Iteration i | Iteration i' | Iteration i" | Iteration i'''

a)     b)     c)     d)     e)

FIG. 13A

| PROCESSOR | | MEMORY | |
|---|---|---|---|
| | 993 | | 994 |

992

| DISPLAY | 995 | INPUT | 996 | NETWORK I/F | 997 |

FIG. 14

Europäisches
Patentamt

European
Patent Office

Office européen
des brevets

# EUROPEAN SEARCH REPORT

Application Number

EP 17 20 8970

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/124452 A1 (TUCKER PAUL A [US] ET AL) 4 May 2017 (2017-05-04) * pages 6-9 and 13; claims 1,3,4,5,9,10,12 * ----- | 1-15 | INV. G06N3/063 G06N3/08 G06N3/04 |
| A | Chonho Lee ET AL: "A General Distributed Deep Learning Platform", Communications of the Korean Institute of Information Scientists and Engineers, vol. 34, no. 3 31 March 2016 (2016-03-31), pages 31-34, XP055484318, Retrieved from the Internet: URL:http://www.dbpia.co.kr/Journal/Article Detail/NODE06639003 [retrieved on 2018-06-14] * the whole document * ----- | 1-15 | ADD. G06F9/50 |
| A | US 2015/324690 A1 (CHILIMBI TRISHUL A [US] ET AL) 12 November 2015 (2015-11-12) * Section 4 * ----- | 1-15 | |

TECHNICAL FIELDS
SEARCHED      (IPC)

G06N
G06F

The present search report has been drawn up for all claims

| Place of search | Date of completion of the search | Examiner |
|---|---|---|
| The Hague | 15 June 2018 | Szymanski, Francois |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.......................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 17 20 8970

This annex lists the patent family members relating to the patent documents cited in the above-mentioned European search report.
The members are as contained in the European Patent Office EDP file on
The European Patent Office is in no way liable for these particulars which are merely given for the purpose of information.

15-06-2018

| Patent document cited in search report | Publication date | Patent family member(s) | Publication date |
|---|---|---|---|
| US 2017124452 A1 | 04-05-2017 | US 2017124452 A1<br>WO 2017075438 A1 | 04-05-2017<br>04-05-2017 |
| US 2015324690 A1 | 12-11-2015 | NONE | |

EPO FORM P0459

For more details about this annex : see Official Journal of the European Patent Office, No. 12/82

## REFERENCES CITED IN THE DESCRIPTION

**Patent documents cited in the description**

- WO 2015003436 A

**Non-patent literature cited in the description**

- **Y. JIA ; E. SHELHAMER ; J. DONAHUE ; S. KARAYEV ; J. LONG ; R. GIRSHICK ; S. GUADARRAMA ; T. DARRELL.** Caffe: Convolutional Architecture for Fast Feature Embedding. *arXiv preprint arXiv:1408.5093,* 2014
- **M. ABADI ; A. AGARWAL ; P. BARHAM.** Large-Scale Machine Learning on Heterogeneous Distributed Systems. *arXiv:1603.04467v2,* 2015
- **S. TOKUI ; K. OONO ; S. HIDO ; J. CLAYTON.** Chainer: a Next-Generation Open Source Framework for Deep Learning. *Proceedings of Workshop on Machine Learning Systems (LearningSys) in The Twenty-ninth Annual Conference on Neural Information Processing Systems (NIPS),* 2015

- MXNet: A Flexible and Efficient Machine Learning Library for Heterogeneous Distributed Systems. **T. CHEN ; M. LI ; Y. LI ; M. LIN ; N. WANG ; M. WANG ; T. XIAO ; B. XU ; C. ZHANG ; Z. ZHANG.** Neural Information Processing Systems. Workshop on Machine Learning Systems, 2015
- **W. WANG ; G. CHEN ; H. CHEN ; T. T. A. DINH ; J. GAO ; O. BENG CHIN ; K.-L. TAN ; S. WANG.** Deep Learning at Scale and at Ease. *ACM Trans. Multimedia Comput. Commun. Appl.,* November 2016, vol. 12 (4